# FASCICULE DE BREVET EUROPEEN

(11) **EP 1 121 580 B1**
(45) Date de publication et mention de la délivrance du brevet: **29.03.2006**
(21) Numéro de dépôt: 99947552.8
(22) Date de dépôt: 12.10.1999
(51) Int. Cl.: G01N 21/21, G01N 21/65, G01N 21/47

(54) **APPAREIL DE CARACTERISATION OPTIQUE DE MATERIAU EN COUCHE MINCE**
VORRICHTUNG ZUR OPTISCHEN CHARAKTERISIERUNG EINES DÜNNSCHICHTMATERIALS
APPARATUS FOR OPTICALLY CHARACTERISING THIN LAYERED MATERIAL

(30) Priorité: 14.10.1998 FR 9812886
(43) Date de publication de la demande: 08.08.2001
(73) Titulaire: Horiba Jobin Yvon S.A.S., 91160 Longjumeau (FR)
(72) Inventeur: DREVILLON, Bernard, F-92140 Clamart (FR); DA SILVA, Edouard, F-59000 Lille (FR); BENFERHAT, Ramdane, F-91490 Oncy sur Ecole (FR)
(74) Mandataire: Catherine, Alain
(86) Numéro de dépôt international: PCT/FR1999/002460
(87) Numéro de publication internationale: WO 2000/022416

(56) Documents cités:
- EP-A- 0 508 257
- EP-A- 0 663 590
- WO-A-97/05473

## Description

La présente invention concerne un appareil de caractérisation optique de matériau en couche mince.

Une telle caractérisation qui est non destructive et peut donc être utilisée in situ au cours de la fabrication ou pour le contrôle de produits finis, permet de connaître certains éléments au moins constituant la matière analysée et éventuellement leur concentration. Elle peut également permettre d'accéder à l'épaisseur de couches minces.

Pour réaliser de telles caractérisations, on connaît jusqu'à présent, d'une part les dispositifs de spectroscopie Raman, d'autre part les réflectomètres, photomètres ou ellipsomètres éventuellement spectroscopiques.

On sait que l'effet Raman est l'effet par lequel un échantillon éclairé à une longueur d'onde donnée λₑ diffuse un rayonnement lumineux Raman à une longueur d'onde λᵣ proche de λₑ dont l'intensité est très faible par rapport à celle de la lumière Rayleigh qui est diffusée à la même longueur d'onde λₑ que la lumière d'éclairage. Dans le cas où le spectromètre Raman est couplé avec un microscope, le faisceau d'éclairage est couramment sous une incidence normale par rapport à l'échantillon et la diffusion Raman est mesurée par son intensité et par son spectre dans un grand angle solide.

On connaît par ailleurs les caractérisations par réflectométrie. Il s'agit alors d'éclairer l'échantillon sous un angle souvent faible (fortement écarté de la normale à l'échantillon) et d'analyser la lumière réfléchie spéculairement par l'échantillon. On s'intéresse alors plus particulièrement à l'intensité lumineuse dans le cas de la photométrie et à l'amplitude des différentes composantes de la lumière polarisée dans le cas de l'ellipsométrie.

On connaît, en particulier, l'ellipsométrie à modulation de phase dans laquelle un modulateur agit sur l'état de polarisation du faisceau lumineux incident, l'ellipsométrie spectroscopique dans laquelle le spectre en longueur d'onde de la lumière réfléchie est analysé et la réflectométrie modulée qui prend en compte l'effet de la modulation produite par une excitation extérieure périodique, par exemple électrique ou optique, agissant sur l'échantillon. Un ellipsomètre spectroscopique modulé est par exemple décrit dans le brevet européen EP-0.663.590 auquel on pourra se référer.

Ces deux grandes branches de la caractérisation optique d'un échantillon présentent chacune leurs avantages propres.

De manière générale, on peut représenter la réponse macroscopique d'un matériau en couche mince à une excitation électromagnétique par un tenseur ε(ω) où ω est la fréquence de l'excitation électromagnétique. Dans le cas d'un solide isotrope, ce tenseur ε(ω) se réduit à un scalaire et on obtient ainsi la relation D = εₒ εE où εₒ est la permittivité électrique du vide, D est le vecteur déplacement électrique et E est le champ électrique appliqué.

La polarisabilité α est alors définie à partir du moment dipolaire local p (par atome ou groupe d'atomes). En effet, p est lié au champ électrique local E_{loc} (lui-même fonction du champ électrique extérieur E par la relation : p = αεₒ E_{loc}.

Le moment dipolaire macroscopique par unité de volume ou vecteur polarisation est donné par la formule : P = Np où N représente la densité volumique de dipôles. La polarisation est reliée aux autres quantités macroscopiques par la relation : P = εₒ(ε-1) E.

La réflectométrie, plus particulièrement l'ellipsométrie spectroscopique, permet d'accéder à la fonction diélectrique ε(ω). Dans le domaine de longueurs d'onde allant de l'ultraviolet au visible, l'absorption est souvent dominée par les transitions électroniques (c'est par exemple le cas dans les semi-conducteurs). Dans le domaine de l'infrarouge, l'ellipsométrie est sensible à l'absorption vibrationnelle, c'est-à-dire à l'excitation des dipôles. L'épaisseur sondée peut varier considérablement en fonction de la longueur d'onde comme dans le cas des semi-conducteurs qui sont généralement très absorbants dans l'ultraviolet et quasi transparents dans l'infrarouge.

La diffusion Raman est elle sensible aux variations de la polarisabilité en présence d'excitations Δα(ω).

On constate donc que portant sur la détermination de grandeurs physiques liées, l'ellipsométrie et la diffusion Raman sont des techniques de natures différentes. En particulier, du point de vue de la mécanique quantique, les sections efficaces de certaines vibrations pourront être très différentes dans un cas et dans l'autre.

La mesure réflectométrique s'effectue de manière spéculaire et élastique (conservation de la longueur d'onde), généralement en réflexion. En conséquence, elle est sensible aux phénomènes d'interférences qui permettent des mesures d'épaisseurs de couches minces. Plus généralement, L'ellipsométrie est bien adaptée à la caractérisation d'un matériau multicouches (présentant des inhomogénéités en épaisseur). Dans les applications usuelles de l'ellipsométrie, l'angle d'incidence varie entre 55 et 80° environ, ce qui correspond aux angles de Brewster de la plupart des matériaux et procure la sensibilité optimale. Deux gammes de langueurs d'onde sont généralement utilisées : la première est dite "UV visible" s'étend du proche ultraviolet (0,25 µm) au proche infrarouge IR (1,7 µm), et la seconde dite " infrarouge " dans l'infrarouge plus lointain de 2,5 à 12 ou 16 µm environ. Les mesures aux longueurs d'onde plus élevées sont difficiles à cause des limitations expérimentales imposées par les sources et les détecteurs, la demande de brevet européen FP-0.663.590 décrit en particulier un ellipsomètre spectroscopique modulé.

ε(ω) est représentée par un nombre complexe dont la détermination nécessite généralement la mesure de deux paramètres indépendants comme cela peut être fait en ellipsométrie. Toutefois, la photométrie, sous réserve de l'utilisation de relations dites de Kramers-Konig, peut permettre également de mesurer ε(ω). Les techniques de réflectométrie modulées mesurent la variation de ε(ω) en présence d'une excitation extérieure, ce qui apporte des informations complémentaires. En particulier, dans des matériaux semi-conducteurs, l'excitation extérieure modulée crée des porteurs chargés qui concourent à cette mesure.

En revanche, la diffusion Raman est inélastique. La mesure s'effectue alors généralement en incidence normale, l'excitation étant fournie par un laser émettant une raie dans l'UV, le visible ou le proche IR. Les photons Raman sont recueillis sous un grand angle solide à des longueurs d'onde proches de celles de la lumière incidente. On mesure donc spectroscopiquement une différence de longueurs d'onde positive ou négative entre la raie excitatrice et le spectre Raman. Par comparaison, l'infrarouge lointain en réflectométrie correspond en Raman aux longueurs d'onde les plus proches de l'excitatrice. De telles mesures sont donc techniquement plus simples en spectrométrie Raman. Il faut souligner que l'épaisseur caractérisée est liée à l'absorption du matériau à la longueur d'onde de la lumière incidente qui est difficilement modifiable en Raman pour un matériau donné.

Les films minces ont fait l'objet d'études par spectroscopie Raman dés la fin des années soixante, Il a d'abord été proposé d'étudier des couches minces déposées sur une surface métallique. Eclairé sous un angle d'incidence de 70°, le flux Raman obtenu présentait un maximum d'intensité vers 60°. Il a ensuite été proposé d'utiliser une couche mince comme un guide d'onde optique auquel un flux lumineux était couplé au moyen d'un prisme ou d'un réseau. Dans des conditions strictes d'angle d'incidence et de polarisation, un ou plusieurs modes transverses électriques ou magnétiques peuvent se propager dans le film en y créant un flux Raman dont l'intensité peut atteindre jusqu'à deux mille fois l'intensité du flux habituellement produite par rétrodiffusion. Dans ce cas, l'épaisseur minimale du film, dépendant de la longueur d'onde d'excitation, ne peut être inférieure à quelques nanométres. On ne peut descendre en dessous de cette limite qu'en recourant à des structures multicouches. Quoi qu'il en soit, toutes ces méthodes nécessitent une préparation particulière du film ou de la couche mince, sur un support spécifique, ce qui implique un appareillage et des ajustements incompatibles avec l'étude de matériaux industriels et encore plus avec des mesures in situ ou en temps réel, pendant la mise en oeuvre d'un procédé de fabrication. La demande de brevet EP-0.508.257 décrit un appareil de spectroscopie Raman associé à un microscope confocal permettant la visualisation du point de l'échantillon sur lequel porte la mesure.

Ces présentations des mesures par effet Raman d'une part, et par réflectométrie d'autre part, ellipsontétrique ou photométrique, en même temps qu'elles font ressortir que l'on accède à des effets différents, sources donc de connaissances et de caractérisations différentes, montrent également les difficultés susceptibles d'être rencontrées surtout lorsque le matériau est en couche mince.

La réalisation des mesures sur le même échantillon, par réflectométrie et par spectroscopie Raman, présente d'autres difficultés. En effet, les angles d'incidence différents pour l'une ou l'autre de ces mesures, les longueurs d'onde également différentes exigent des appareils optiques spécialement adaptés à chacune des techniques et ne permettent d'utiliser ni la même source pour l'illumination, ni le même système de détection en longueur d'onde pour la réception, dans l'un et l'autre cas.

De plus, on a longtemps considéré que la mise en oeuvre simultanée de ces deux techniques était susceptible de produire des effets parasites affectant la qualité de chacune des mesures. Ainsi, les mesures de spectrométrie Raman par rétrodiffusion, nécessitent d'éclairer l'échantillon avec des intensités lumineuses qui peuvent modifier l'échantillon en induisant des recuits, des cristallisations ou des effusions (extraction des atomes d'hydrogène, par exemple) et risquent de perturber la mesure réflectométrique.

Il faut surtout remarquer que les dimensions des zones éclairées sur l'échantillon lors de l'une ou l'autre des mesures peuvent être très différentes.

L'utilisation d'un unique type de mesure est par exemple décrite dans le document WO-97/05473, qui concerne des micro-éprouvettes optiques et des méthodes pour l'analyse spectrale de matériaux. Dans une forme de réalisation particulière, une fibre optique multimode coupe une source de lumière et un échantillon. L'échantillon est également couplé à un détecteur, qui détecte la lumière renvoyée par l'échantillon éclairé, selon un angle prédéterminé par rapport à la direction de la lumière.

Pourtant, la réalisation des mesures Raman et réflectométrique sur des zones superposées d'une couche mince, simultanément, présente de grands avantages, d'une part directement en ce qui concerne la caractérisation des matériaux, d'autre part en ce qui concerne le contrôle de procédé d'élaboration pouvant mettre en oeuvre de telles caractérisations. Les mesures pouvant êtres faites simultanément en temps réel, il est possible de suivre les variations et l'évolution relative à la vitesse des paramètres mesurés. On obtient ainsi une description physico-chimique très détaillée des couches, comme cela est illustré plus loin.

Le but de la présente invention est donc de résoudre les différentes difficultés indiquées plus haut et de proposer un appareil permettant la caractérisation d'une couche mince par effet Raman en rétrodiffusion, sans risque de modification de la couche au cours de la mesure.

C'est un autre but de l'invention que de proposer un appareil permettant la caractérisation simultanée par effet Raman et par réflectométrie.

La réflectométrie englobe, comme nous l'avons indiqué plus haut, les mesures photométriques dans lesquelles seule l'énergie lumineuse est mesurée et les mesures ellipsométriques dans lesquelles les différentes composantes polarisées du flux lumineux sont considérées. Dans l'un et l'autre cas, la réflectométrie peut être spectroscopique, c'est-à-dire qu'une analyse spectrale du flux mesuré est réalisée.

A cet effet, l'invention concerne un appareil de caractérisation optique d'un matériau en couche mince par spectrométrie Raman en rétrodiffusion comportant un bâti, une source laser d'excitation, monochromatique, des moyens optiques dirigeant un flux lumineux émis par la source d'excitation vers le matériau à caractériser, et des moyens de collecte et de sélection de la lumière diffusée par effet Raman.

Dans les moyens optiques dirigeant le flux laser d'excitation vers l'échantillon, il existe entre le laser et l'échantillon un moyen qui rend homogène la répartition de l'énergie par unité de surface, sur une surface minimum de quelques dizaines de micromètres carrés.

Selon l'invention, l'appareil comporte des moyens de mesure réflectométriques, solidaires des moyens de mesure Raman, ces moyens de mesure réflectométriques comportant des moyens d'excitation réflectométriques s'adressant à la même zone de l'échantillon que les moyens d'excitation Raman.

L'appareil de l'invention peut ainsi être utilisé;
- soit pour de pures mesures par spectrométrie Raman,
- soit pour de pures mesures réflectrométriques,
- soit pour des mesures combinées par spectrométrie Raman et réflectométriques.

Dans différents modes de réalisation particuliers présentant chacun leurs propres avantages et susceptibles d'être mis en oeuvre selon de nombreuses combinaisons techniquement possibles :
- les moyens de mesure réflectométriques sont des moyens de mesure photométriques :

- les moyens de mesure réflectométriques sont des moyens de mesure ellipsométriques :

- le moyen qui rend homogène la répartition de l'énergie, comporte une fibre multimode ;
- le diamètre de la fibre est adapté à la surface de l'échantillon qui doit être éclairée ;
- la fibre est interchangeable; ainsi peut-on notamment changer le diamètre éclairé, au moyen de barillets de fibres de différents diamètres;
- l'appareil comporte plusieurs fibres permettant d'éclairer l'échantillon sur une zone focalisable sur la fente d'un spectromètre ou pour adapter la surface d'excitation Raman à la surface analysée par photométrie ;
- les moyens de mesure réflectométriques sont des moyens de mesure de réflectométrie modulée ;
- la modulation est optique ;
- la modulation est électrique ;
- la modulation est assurée par la source d'excitation Raman ;
- la source réflectométrique est couplée au reste de l'appareil par une fibre optique ;
- l'un au moins des récepteurs Raman et réflectométrique est relié au reste de l'appareil par une fibre optique.

L'invention sera décrite en détail en référence aux Figure annexées, sur lesquelles :

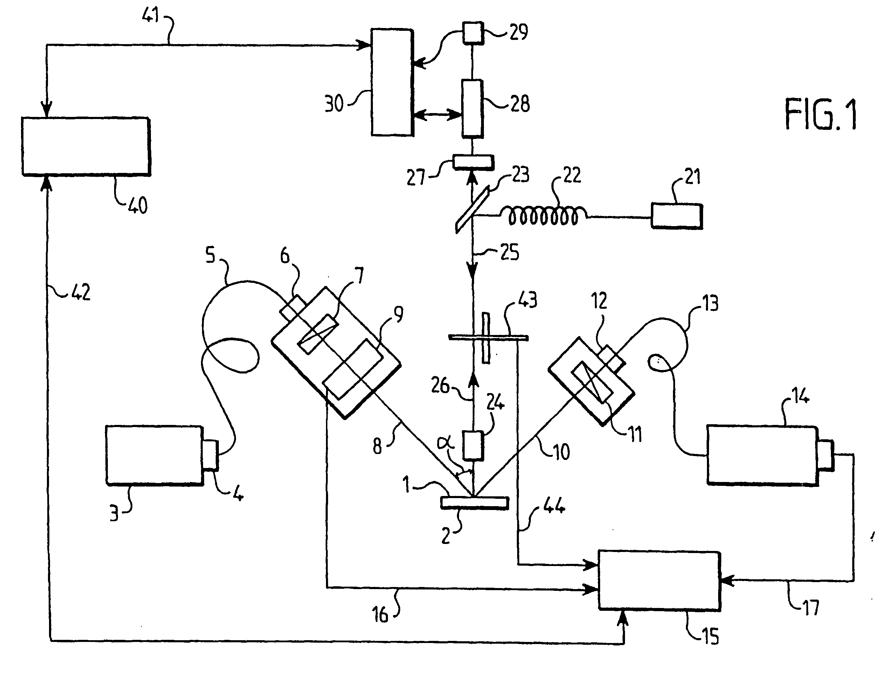

- la Figure 1 est un schéma de principe de l'appareil selon l'invention ;
- la Figure 2 est une représentation schématique de la répartition transverse de l'énergie dans un flux lumineux monochromatique, d'une part gaussien (a), d'autre part après modification par la fibre optique multimode selon l'invention (b).

L'appareil de l'invention permet de réaliser une mesure Raman au point 1 de l'échantillon 2. A cet effet, une source lumineuse 21 produit un faisceau lumineux à une longueur d'onde d'excitation Raman λₑ transmis par une fibre multimode 22. Ce faisceau lumineux est réfléchi par une lame 23 qui le dirige vers un objectif 24 qui le focalise au point 1 de l'échantillon. Une partie du faisceau rétrodiffusé 26 par effet Raman est à une longueur d'onde λᵣ. Un filtre 27 permet de sélectionner ce flux Raman à la longueur d'onde λᵣ et de rejeter le flux diffusé à la longueur d'onde excitatrice λₑ. Ainsi, le faisceau transmis par le filtre 27 ne comporte pas de composantes à la longueur d'onde d'excitation λₑ. Ce flux est analysé par un spectromètre 28 couplé à un détecteur 29. Une unité de commande 30 pilote le spectromètre 28 et reçoit les informations produites par le détecteur 29.

De manière en soi classique, l'unité de commande 30, par traitement des informations de commande du spectromètre 28 et des informations fournies par le récepteur 29, permet d'élaborer des données de caractérisation Raman de l'échantillon 2.

Il a été constaté que l'utilisation d'une telle fibre multimode 22 modifie substantiellement la répartition transverse de l'énergie lumineuse contenue dans le flux provenant de la source 21.

Il est bien connu que cette répartition lumineuse, à la sortie de la source 21 qui est généralement un laser, est de forme gaussienne. Cela présente une difficulté pour la spectroscopie Raman en rétrodiffusion si l'on désire éclairer une surface relativement grande de l'échantillon. La focalisation d'un faisceau gaussien par un objectif de microscope donne une tache lumineuse (spot) d'un diamètre de l'ordre de la limite de diffraction, soit 1,2 λ/na, λ étant la longueur d'onde et na étant l'ouverture numérique de l'objectif, soit dans le visible avec un objectif na = 0,9 et λ = 0,5 µm un spot submicronique, donc une intensité par unité de surface très élevée qui perturbe ou détruit l'échantillon lorsqu'il s'agit d'une couche mince.

Pour remédier à cette difficulté, il a été envisagé de conserver la puissance mais de défocaliser le faisceau au niveau de l'échantillon. On améliore effectivement ainsi la répartition transverse de l'énergie, mais elle n'est toujours pas homogène et présente des maxima et des minima qui suscitent les mêmes difficultés d'adaptation que celles que nous avons indiquées plus haut avec un faisceau gaussien.

Cela est par exemple analysé dans le livre de Born Wolf « Principles of Opties » Perganon Press - NY 1993. Le résultat pratique est que la défocalisation d'un faisceau gaussien par une optique sphérique, cylindrique ou asphérique, est inhomogène et la modification de la couche ne se fait plus automatiquement au centre mais la couche peut tout de même être ou détruite ou altérée localement.

Pour éviter ces inconvénients et préserver l'intégrité de la couche mince étudiée, une fibre optique multimode est interposée entre la source monochromatique et la couche. L'interposition de cette fibre optique multimode permet en détruisant la répartition gaussienne de l'énergie d'obtenir, à la sortie de celle-ci, une répartition homogène de la densité d'énergie qui est alors approximativement la même au centre et sur les bords de la tache lumineuse d'éclairement.

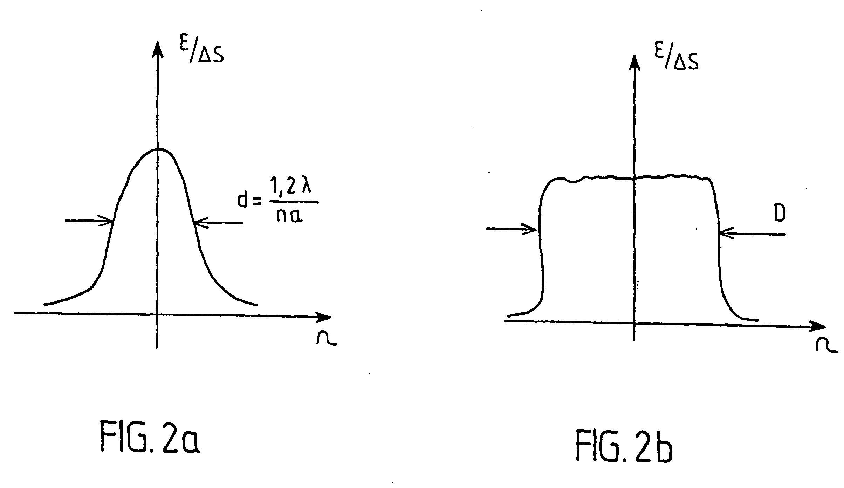

La Figure 2 donne une répartition comparée de cette densité d'énergie lumineuse E/ΔS, au travers du faisceau, respectivement pour un faisceau gaussien tel qu'il sort du laser (Figure 2a) et du même faisceau à la sortie d'une fibre multimode (Figure 2b).

La fibre optique multimode a de préférence un diamètre D de l'ordre de 100 microns et une longueur d'au moins quelques décimètres.

En microscopie Raman, avec un objectif X50, on obtient ainsi une excitation de l'échantillon sur un disque de diamètre D d'environ 20 microns.

On obtient alors une densité d'énergie sur cet échantillon de l'ordre de 3,3 Watts/mm² pour un laser ayant une puissance de l'ordre d'un milliwatt.

En changeant le diamètre de la fibre optique, on peut modifier la densité d'énergie.

Il est également possible d'exciter l'énergie avec plusieurs fibres, les points d'excitation étant répartis en ligne, le flux collecté étant focalisé sur la fente d'entrée du spectromètre d'analyse.

On cherche à caractériser la zone 1 de l'échantillon 2. Cette caractérisation est faite d'une part par ellipsométrie. Une source ellipsométrique 3 est reliée par un coupleur 4 à une fibre optique 5 qui transporte le flux lumineux produit par la source et l'adresse par l'intermédiaire d'un coupleur 6, sur un polariseur 7 qui produit un faisceau lumineux 8 envoyé sur l'échantillon 1 sous un angle d'incidence α.

Entre le polariseur 7 et l'échantillon, est placé un modulateur de phase 9 qui assure, de manière connue en soi, la modulation de l'état de polarisation du faisceau lumineux 8.

Le faisceau 8 est réfléchi par l'échantillon 2 en un faisceau lumineux 10 qui est analysé par un polariseur 11 et couplé par un système optique 12 à une fibre 13 qu'il adresse sur un photorécepteur 14 qui comporte éventuellement une sélection en fonction de la longueur d'onde. Une unité de commande 15 pilote le modulateur de phase 9 et par l'intermédiaire de la connexion 16. Cette même unité de commande 15 reçoit le signal produit par le photorécepteur 14 au travers de la ligne 17.

Par un traitement de ces données, l'unité de commande 15 est à même de fournir les informations ellipsométriques représentatives de l'échantillon 2 et susceptibles de permettre sa caractérisation ellipsométrique.

Les unités de commande ellipsométriques d'une part et Raman 30 d'autre part sont électriquement reliées à un ordinateur de commande d'ensemble 40 qui est l'interface utilisatrice de l'ensemble de l'appareil et permet d'obtenir la caractérisation physico-chimique complète du point 1 de l'échantillon 2.

Les moyens de mesure ellipsométriques décrits plus haut mettent en oeuvre un ellipsomètre à modulation de phase, le dispositif de l'invention peut fonctionner avec tout type d'ellipsomètre, spectroscopique ou non, et même avec des photomètres qui analysent le flux réfléchi 10 indépendamment de son état de polarisation, mais généralement en fonction de la longueur d'onde. Un ellipsomètre à modulation de phase permet des mesures photométriques et ellipsométriques simultanées.

Les moyens ellipsométriques incorporent avantageusement des moyens de modulation extérieure produisant des effets électriques, optiques ou thermiques sur l'échantillon à une fréquence déterminée. Ces moyens peuvent être par exemple un écran tournant ou shutter 43 dont l'orientation déterminant la fréquence et la phase de la modulation est pilotée par l'unité de commande 15 à travers la ligne 44.

Avantageusement, des moyens d'excitation Raman, c'est-à-dire le faisceau lumineux 25 produit par la source d'excitation Raman 21, constitue les moyens de modulation ellipsométriques.

La zone de l'échantillon mesurée lors de la mesure Raman est précisément positionnée et de préférence comprise dans celle mesurée par la mesure ellipsométrique. Ces deux mesures peuvent être faites simultanément.

L'appareil de l'invention est plus particulièrement adapté aux applications suivantes dans lesquelles il permet de réaliser des caractérisations auparavant difficiles :

### a) Le silicium polycristallin (ou microcristallin) en couches minces

Le silicium partiellement cristallisé est très couramment utilisé dans l'industrie des semi-conducteurs. Il consiste en des cristallites de tailles variables reliées par des joints de gain amorphes.

Ce matériau est souvent inhomogène en épaisseur et présente en particulier une rugosité de surface liée à la taille des cristallites. L'ellipsométrie dans le domaine de longueur d'onde s'étendant de l'Ultra Violet au visible permet la mesure très précise (≈ 1 %) de l'épaisseur totale et de la rugosité (≤ 50 nm), très difficilement accessibles en Raman. De manière générale, l'ellipsométrie UV-visible est beaucoup plus sensible à la morphologie des couches (densité,...).

Les deux techniques permettent de mesurer la composition moyenne (fraction cristalline) de la couche, l'ellipsométrie permettant en outre de caractériser une inhomogénéité en épaisseur.

En revanche, la taille des grains peut être repérée par spectrométrie Raman, alors qu'elle est très difficilement mesurable par réflectométrie. De même, la spectrométrie Raman permet d'évaluer les contraintes existantes au sein du matériau à partir de déplacement de la longueur d'onde des raies caractéristiques. Ces contraintes sont quasiment inaccessibles par réflectométrie, par exemple par ellipsométrie.

Les caractérisations par ellipsométrie (principalement ici dans le domaine UV-visible) et Raman sont donc complémentaires.

### b) Le carbone en couches minces

Les couches minces de carbone sont utilisées dans de très nombreuses applications. Les considérations développées au sujet de l'exemple précédent, en terme d'épaisseur et de morphologie (densité, rugosité) s'appliquent évidemment aussi dans le cas du carbone en couches minces.

Le carbone peut être cristallin ou amorphe. Deux formes cristallines existent dans la nature, le diamant (hybridation sp³) ou le graphite (hybridation sp²) aux propriétés très différentes. Il est possible de les identifier à la fois par spectrométrie Raman et par ellipsométrie.

Sous forme amorphe, les deux phases généralement coexistent, influençant considérablement les propriétés pratiques (dureté,...), le carbone " adamantin " étant par exemple riche en phase sp³. Cependant, ces deux phases apparaissent souvent liées entre elles à l'échelle atomique, sans qu'il soit possible d'identifier des agrégats comme dans le cas précédent. Ces couches minces. étant souvent déposées par plasma, contiennent une proportion importante d'hydrogène, qui peut également influer sur les propriétés (les couches pouvant même apparaître comme polymériques).

Les vibrations CHₙ sont plus aisément identifiables en ellipsométrie Infra-Rouge qu'en spectrométrie Raman, à cause des différences de sections efficaces. Or, généralement, l'hydrogène est essentiellement incorporé à la phase sp³. L'ellipsométrie IR est donc bien adaptée à la caractérisation de la phase sp³. En revanche, la spectrométrie Raman est beaucoup plus sensible aux liaisons C=C que l'ellipsométrie IR, donc plus sensible à la phase sp². Comme dans l'exemple précédent, l'appareil de l'invention qui permet des mesures en temps réel et au même point, à la fois de spectrométrie Raman et de réflectrométrie, assure une caractérisation complète de tels échantillons.

### c) Les polymères

Dans le cas des polymères, la complémentarité de l'ellipsométrie IR et la spectrométrie Raman provient des différentes sensibilités des deux techniques à diverses vibrations, la spectrométrie Raman étant très sensible aux groupements C=C, et l'ellipsométrie IR aux groupements C=O présents dans de nombreux polymères comme le polycarbonate. L'appareil de l'invention permettant la mise en oeuvre de ces deux types de mesures en même temps et au même point permet de tirer le plus grand profit de cette complémentarité. De manière générale, la spectrométrie Raman est complémentaire de l'ellipsométrie IR lointain en permettant des caractérisations sensibles aux déformations des noyaux benzéniques.

La complémentarité de la spectrométrie Raman et de l'ellipsométrie UV-visible est encore illustrée par certains traitements de polymères, par exemple par plasma. Un phénomène de réticulation sera aisément mis en évidence, par ellipsométrie, par le biais d'une augmentation d'indice de réfraction (densification) ou d'une absorption dans l'UV (apparition de groupements chromophores). On pourra, de façon un peu analogue, mettre en évidence un processus de dégradation. L'épaisseur de polymère, concernée par la modification, sera évaluée en ellipsométrie grâce au formalisme multicouches. En revanche, l'ellipsométrie UV-visible, étant peu sensible à la structure du matériau, sera mal adaptée à la description du mécanisme microscopique de réticulation ou de dégradation. La modification de structure du polymère ou un état de polymérisation pourront être caractérisés aisément par des mesures de spectrométrie Raman.

Ces exemples d'applications de l'appareil de l'invention illustrent son apport et ne sont en rien limitatifs.

## Revendications

1. Appareil de caractérisation optique d'un matériau en couche mince par spectrométrie Raman en rétrodiffusion comportant un bâti, une source laser (21) d'excitation, monochromatique, des moyens optiques (23, 24) dirigeant un flux lumineux émis par la source (21) d'excitation vers le matériau à caractériser, et des moyens de collecte (24) et de sélection (27, 28) de la lumière diffusée par effet Raman, ledit appareil étant **caractérisé en ce que** dans les moyens optiques dirigeant le flux laser d'excitation vers l'échantillon, il existe entre le laser et l'échantillon un moyen (22) qui rend homogène la répartition de l'énergie par unité de surface, sur une surface minimum de quelques dizaines de micromètres carrés, et **en ce que** ledit appareil comporte des moyens de mesure de caractérisation réflectométrique (3-14) permettant la mesure de la fonction diélectrique ε(ω) du matériau dans une zone de l'échantillon, solidaires des moyens de mesure Raman, lesdits moyens de mesure réflectométriques comportant des moyens d'excitation réflectométriques (3-9) s'adressant à la même zone de l'échantillon que les moyens d'excitation Raman.

2. Appareil de caractérisation optique de matériau en couche mince selon la revendication 1, **caractérisé en ce que** Ics moyens de mesure réflectométriques sont des moyens de mesure photométriques.

3. Appareil de caractérisation optique de matériau en couche mince selon la revendication 1, **caractérisé en ce que** les moyens de mesure réflectométriques sont des moyens de mesure ellipsométriques.

4. Appareil de caractérisation optique d'un matériau en couche mince selon l'une des revendications 1 à 3, **caractérisé en ce que** ledit moyen qui rend homogène la répartition de l'énergie, comporte une fibre multimode (22).

5. Appareil de caractérisation optique d'un matériau en couche mince selon la revendication 4, **caractérisé en ce que** le diamètre de la fibre (22) est adapté à la surface de l'échantillon qui doit être éclairée.

6. Appareil de caractérisation optique d'un matériau en couche mince selon l'une des revendications 4 ou 5, **caractérisé en ce que** la fibre (22) est interchangeable.

7. Appareil de caractérisation optique de matériau en couche mince selon l'une des revendications 4 à 6, **caractérisé en ce qu'**il comporte plusieurs fibres permettant d'éclairer l'échantillon sur une zone focalisable sur la fente d'un spectromètre ou pour adapter la surface d'excitation Raman à la surface analysée par photométrie.

8. Appareil de caractérisation optique de matériau en couche mince selon l'une quelconque des revendications 1 à 3, **caractérisé en ce que** les moyens de mesure réflectométriques sont des moyens de mesure de réflectométrie modulée.

9. Appareil de caractérisation optique de matériau en couche mince selon la revendication 8, **caractérisé en ce que** la modulation est optique.

10. Appareil de caractérisation optique de matériau en couche mince selon la revendication 8, **caractérisé en ce que** la modulation est électrique.

11. Appareil de caractérisation optique de matériau en couche mince selon la revendication 9, **caractérisé en ce que** la modulation est assurée par la source d'excitation Raman.

12. Appareil de caractérisation optique de matériau en couche mince selon l'une des revendications 1 à 3, **caractérisé en ce que** la source réflectométrique est couplée au reste de l'appareil par une fibre optique.

13. Appareil de caractérisation optique de matériau en couche mince selon l'une des revendications 1 à 12, **caractérisé en ce que** l'un au moins des récepteurs Raman et réflectométrique est relié au reste de l'appareil par une fibre optique.

## Patentansprüche

1. Vorrichtung zur optischen Charakterisierung eines Dünnschichtmaterials durch Raman Rückstreuungsspektrometrie mit einem Ständer, einer monochromen Erregerlaserquelle (21), optischen Mitteln (23, 24), die einen von der Erregerquelle (21) ausgesendeten Lichtstrom zum zu charakterisierenden Material leiten, und mit Mitteln zum Sammeln (24) und zur Auswahl (27, 28) des durch den Ramaneffekt ausgesendeten Lichts, wobei die besagte Vorrichtung **dadurch gekennzeichnet ist, dass** in den optischen Mitteln, welche den Erregerlaserstrom zur Probe leiten ein Mittel (22) zwischen dem Laser und der Probe vorhanden ist, das für die homogene Verteilung der Energie pro Oberflächeneinheit auf einer Mindestoberfläche von einigen Zehnteln Quadratmikrometern sorgt, und **dadurch**, dass besagte Vorrichtung Messmittel für die reflektometrische Charakterisierung (3-14) beinhaltet, welche es ermöglichen, die dielektrische Funktion ε (w) des Materials in der Zone der Probe gemeinsam mit den Mitteln zur Ramanmessung zu messen, wobei besagte reflektometrische Messmittel reflektometrische Erregermittel (3-9) beinhalten, die sich an dieselbe Zone der Probe wie die Raman-Erregermittel richten.

2. Vorrichtung zur optischen Charakterisierung eines Dünnschichtmaterials gemäß Anspruch 1, **dadurch gekennzeichnet, dass** die reflektometrischen Messmittel photometrische Mittel sind.

3. Vorrichtung zur optischen Charakterisierung eines Dünnschichtmaterials gemäß Anspruch 1, **dadurch gekennzeichnet, dass** die reflektometrischen Messmittel elipsometrische Messmittel sind.

4. Vorrichtung zur optischen Charakterisierung eines Dünnschichtmaterials gemäß einem der Ansprüche 1 bis 3, **dadurch gekennzeichnet, dass** besagtes Mittel, das für die homogene Verteilung der Energie sorgt, eine Multimodefaser (22) beinhaltet.

5. Vorrichtung zur optischen Charakterisierung eines Dünnschichtmaterials gemäß Anspruch 4, **dadurch gekennzeichnet, dass** der Durchmesser der Faser (22) der Oberfläche der Probe angepasst ist, die beleuchtet werden muss.

6. Vorrichtung zur optischen Charakterisierung eines Dünnschichtmaterials gemäß einem der Ansprüche 4 oder 5, **dadurch gekennzeichnet, dass** die Faser (22) austauschbar ist.

7. Vorrichtung zur optischen Charakterisierung eines Dünnschichtmaterials gemäß einem der Ansprüche 4 bis 6, **dadurch gekennzeichnet, dass** sie mehrere Fasern beinhaltet, die es ermöglichen, die Probe über einen fokussierbaren Bereich auf dem Spalt eines Spektrometers zu beleuchten oder die Raman-Erregeroberfläche an die durch Photometrie analysierte Oberfläche anzupassen.

8. Vorrichtung zur optischen Charakterisierung eines Dünnschichtmaterials gemäß einem der Ansprüche 1 bis 3, **dadurch gekennzeichnet, dass** die reflektometrischen Messmittel modulierte reflektometrische Messmittel sind.

9. Vorrichtung zur optischen Charakterisierung eines Dünnschichtmaterials gemäß Anspruch 8, **dadurch gekennzeichnet, dass** die Modulation optisch ist.

10. Vorrichtung zur optischen Charakterisierung eines Dünnschichtmaterials gemäß Anspruch 8, **dadurch gekennzeichnet, dass** die Modulation elektrisch ist.

11. Vorrichtung zur optischen Charakterisierung eines Dünnschichtmaterials gemäß Anspruch 9, **dadurch gekennzeichnet, dass** die Modulation durch die Raman-Erregerquelle sichergestellt ist.

12. Vorrichtung zur optischen Charakterisierung eines Dünnschichtmaterials gemäß einem der Ansprüche 1 bis 3, **dadurch gekennzeichnet, dass** die reflektometrische Quelle mittels eines Lichtwellenleiters mit dem Rest der Vorrichtung gekoppelt ist.

13. Vorrichtung zur optischen Charakterisierung eines Dünnschichtmaterials gemäß einem der Ansprüche 1 bis 12, **dadurch gekennzeichnet, dass** mindestens einer der Raman- und reflektometrischen Empfänger mit dem Rest der Vorrichtung durch einen Lichtwellenleiter verbunden ist.

## Claims

1. An apparatus for optically characterising a thin-layered material by backscattering Raman spectrometry comprising a frame, a monochromatic excitation laser source (21), optical means (23, 24) directing a light flux that is emitted by the excitation source (21) toward the material to be **characterised**, and means for collecting (24) and selecting (27, 28) the light diffused by Raman effect, said apparatus being **characterised in that** in the optical means directing the excitation laser flux toward the sample, there exists between the laser and the sample a means (22) homogenising the distribution of energy per surface unit, over a minimum surface of some tens of square micrometers, and **in that** the said apparatus comprises means for reflectometric measurement (3-14) enabling to measure the dielectrique function ε(ω) of the material into a region of the sample, integral with the Raman measuring means, whereas this reflectometric measuring means comprises reflectometric excitation means (3-9) directed on the same zone of the sample as the Raman excitation means.

2. An apparatus for optically characterising a thin-layered material according to claim 1, **characterised in that** the reflectometric measuring means are photometric measuring means.

3. An apparatus for optically characterising a thin-layered material according to claim 1, **characterised in that** the reflectometric measuring means are ellipsometric measuring means.

4. An apparatus for optically characterising a thin-layered material according to any of claims 1 to 3, **characterised in that** the said means homogenising the distribution of energy comprises a multimode fiber (22).

5. An apparatus for optically characterising a thin-layered material according to claim 4, **characterised in that** the diameter of the fiber (22) is suited to the surface of the sample that must be lit.

6. An apparatus for optically characterising a thin-layered material according to any of claims 4 or 5, **characterised in that** the fiber (22) is interchangeable.

7. An apparatus for optically characterising a thin-layered material according to any of claims 4 to 6, **characterised in that** it comprises several fibers enabling to light the sample over a focusable zone over the slot of a spectrometer or to suit the Raman excitation surface to the surface analysed by photometry.

8. An apparatus for optically characterising a thin-layered material according to any of claims 1 to 3, **characterised in that** the reflectometric measuring means are modulated reflectometry measuring means.

9. An apparatus for optically characterising a thin-layered material according to claim 8, **characterised in that** the modulation is optical.

10. An apparatus for optically characterising a thin-layered material according to claim 8, **characterised in that** the modulation is electric.

11. An apparatus for optically characterising a thin-layered material according to claim 9, **characterised in that** the modulation is ensured by the Raman excitation source.

12. An apparatus for optically characterising a thin-layered material according to any of claims 1 to 3, **characterised in that** the reflectometric source is coupled to the remainder of the apparatus by an optical fiber.

13. An apparatus for optically characterising a thin-layered material according to any of claims 1 to 12, **characterised in that** at least one of the Raman and reflectometric receivers is connected to the remainder of the apparatus by an optical fiber.
